(19) Europäisches Patentamt
European Patent Office
Office européen des brevets

(11) Publication number: **0 197 775**
**A2**

(12) **EUROPEAN PATENT APPLICATION**

(21) Application number: 86302487.3

(22) Date of filing: 04.04.86

(51) Int. Cl.[4]: C01B 33/28 , C01B 33/20

(30) Priority: 08.04.85 US 720915

(43) Date of publication of application: 15.10.86 Bulletin 86/42

(84) Designated Contracting States: BE DE FR GB IT NL SE

(71) Applicant: MOBIL OIL CORPORATION
150 East 42nd Street
New York New York 10017(US)

(72) Inventor: Olson, David Harold
11 Morningside Drive
Pennington New Jersey 08534(US)
Inventor: Valyocsik, Ernest William
960 Randolph Drive
Yardley Pennsylvania 19067(US)

(74) Representative: West, Alan Harry
Mobil Court 3 Clements Inn
London WC2A 2EB(GB)

(54) **Synthesis of large crystal zeolite ZSM-5.**

(57) A method for producing large crystal zeolite ZSM-5 having an average particle diameter between 1 and 100 microns from a reaction mixture of alumina, silica, alkali metal oxide, water and tetraalkylammonium compounds, including an added mixed ammonium ion wherein the initial $OH^-/SiO_2$ ratio is controlled between about 0.01 and 0.5 and the ratio of added mixed ammonium ion to $SiO_2$ is between about 0.01 and 1.0.

EP 0 197 775 A2

# SYNTHESIS OF LARGE CRYSTAL ZEOLITE ZSM-5

The present invention relates to a method for producing large crystal zeolite ZSM-5.

Zeolite ZSM-5 is a relatively new zeolite which is disclosed in U.S. Patent No. 3,702,886 and which, in its conventionally synthesized aluminosilicate form, has the following composition expressed in terms of mole ratios of oxides in the anhydrous state:

$0.9 \pm 0.2\ M_{2/n}O : Al_2O_3 : xSiO_2$

wherein M is a cation having a valence n selected from the group consisting of an tetraalkylammonium cation, the alkyl group of which contain 2-5 carbon atoms, preferably propyl, and an alkali metal cation, especially sodium and X is at least 5.

ZSM-5 has a distinctive X-ray diffraction pattern which distinguishes it from other known zeolites and which has the significant lines shown in Table I below:

TABLE I

| Interplanar Spacing d (A) | Relative Intensity |
|---|---|
| 11.1 ± 0.3 | S |
| 10.0 ± 0.3 | S |
| 7.4 ± 0.2 | W |
| 7.1 ± 0.2 | W |
| 6.3 ± 0.2 | W |
| 6.04 ± 0.2 | W |
| 5.56 ± 0.1 | W |
| 5.01 ± 0.1 | W |
| 4.60 ± 0.08 | W |
| 4.25 ± 0.08 | W |
| 3.85 ± 0.07 | VS |
| 3.71 ± 0.05 | S |
| 3.04 ± 0.03 | W |
| 2.99 ± 0.02 | W |
| 2.94 ± 0.02 | W |

These values were determined by standard techniques using the a scintillation counter spectrometer with a strip chart pen recorder an employing the K-alpha doublet of copper as the incident radiation. The peak heights, I, and the positions as a function of 2 times theta, where theta is the Bragg angle, were read from the spectrometer chart. From these, the relative intensities, $100I/I_o$, where $I_o$ is the intensity of the strongest line or peak, and d (obs), the interplanar spacing in A, corresponding to the recorded lines, were calculated. In Table I the relative intensities are given in terms of the symbols W=Weak, S=Strong and VS=Very Strong. It should be understood that this X-ray diffraction pattern is characteristic of all the species of ZSM-5 zeolites. Ion exchange of the sodium ion with cations reveals substantially the same pattern with some minor shifts in interplanar spacing and variation in relative intensity. Other minor variations can occur depending on the silicon to aluminum ratio of the particular sample, as well as if it has been subjected to thermal treatment.

As synthesized according to the method described in U.S. Patent 3,702,886, ZSM-5 has an average particle diameter of less than 1/2 micron. It is, however, known from, for example, EP-A-26963

that ZSM-5 can be synthesized with an average particle diameter of 1-100 micron from a reaction mixture containing tetramethylammonium (TMA) cations as well as $C_2$-$C_5$ alkylammonium cations provided the $OH^-/SiO_2$ molar ratio of the mixture is between 0 01 and 0 5 and the $TMA/SiO_2$ molar ratio is between 0 01 and 1 0.

In accordance with the present invention it has now been found that ZSM-5 with an average particle diameter between about 1 and 100 microns, can be reproducibly obtained with certain mixed ammonium cations provided relatively close control is exerted over the mixed cation/$SiO_2$ molar ratio of the synthesis mixture.

Accordingly, the invention resides in a method of producing the zeolite ZSM-5 having an average particle size of at least 1 micron, comprising preparing a reaction mixture containing water and sources of an alkali metal oxide, alumina, silica, a $C_2$-$C_5$ tetralkylammonium cation R, and a mixed ammonium cation Q, the reaction mixture being arranged so that:

a) the $OH^-/SiO_2$ mole ratio is between 0.01 and 0.5,

b) the $Q/SiO_2$ mole ratio is between 0.01 and 1.0, and

c) Q is the mixed ammonium cation $R^1$, $R^2$, $R^3$, $R^4$ $N^+$ in which at least two of the $R^1$, $R^2$, $R^3$, and $R^4$ groups are different and each is selected from H, alkyl or heteroalkyl of 1 to 20 carbon atoms, aryl, heteroaryl, and cycloalkyl or heterocycloalkyl of 3 to 6 carbon atoms, provided that were $R^1$ is methyl, at least one of $R^2$, $R^3$ and $R^4$ is other than $C_2$-$C_5$ alkyl; or wherein Q is a mixed ammonium cation in which the nitrogen atom is the or a heteroatom in a heterocyclic compound and is also bonded to at least one group $R^5$ wherein $R^5$ is selected from H, alkyl or heteroalkyl of 1 to 20 carbon atoms, aryl or heteroaryl, and cycloalkyl or heterocycloalkyl of 3 to 6 carbon atoms.

In general terms the method of the invention involves initially forming a reaction mixture which comprises water and sources of alumina (if added), silica, an alkali metal oxide, a mixed ammonium cation Q and a $C_2$-$C_5$ tetraalkylammonium cation R and which preferably has a composition, in terms of mole ratios of oxides, falling within the following range:

| | | |
|---|---|---|
| $Al_2O_3/SiO_2$ | = | 0-0.2 |
| $H_2O/SiO_2$ | = | 5-200 |
| $OH^-/SiO_2$ | = | 0.01-0.5, more preferably 0 01-0 2 |
| $M/SiO_2$ | = | 0.01-3.0 |
| $Q/SiO_2$ | = | 0 01-1 0, more preferably 0 01-0 5 |
| $R/SiO_2$ | = | 0.01-1.0 |

wherein M is an alkali metal cation and wherein Q is a mixed ammonium cation $R^1$, $R^2$, $R^3$, $R^4$ $N^+$ in which at least two of the $R^1$, $R^2$, $R^3$, and $R^4$ groups are different and each is selected from H, alkyl or heteroalkyl of 1 to 20 carbon atoms aryl, heteroaryl, and cycloalkyl or heterocycloalkyl of 3 to 6 carbon atoms, provided that where $R^1$ is methyl, at least one of $R^2$, $R^3$ and $R^4$ is other than $C_2$-$C_5$ alkyl; or wherein Q is a mixed ammonium cation, in which the nitrogen atom is the or a heteroatom in a heterocyclic compound and is also bonded to at least one group $R^5$ wherein $R^5$ is selected from H, alkyl or heteroalkyl of 1 to 20 carbon atoms, aryl or heteroaryl, and cycloalkyl or heterocycloalkyl of 3 to 6 carbon atoms.

Preferred examples of Q are triethylpropylammonium cation, 2-hydroxyethyltrimethylammonium cation, trimethylbenzyl ammonium cation, ethylquinolinium cation, methylethylpiperdinium cation, and di (N-ethyl) pyrazinium cation.

It is recalled that in calculating the mole ratio of hydroxide ions/silica, it is conventional to calculate hydroxide by summing moles of $OH^-$, whether added as NaOH, as quaternary ammonium hydroxide (in the case of a conventional preparation), as sodium silicate (NaOH + $SiO_2$), as sodium aluminate (NaOH + $Al_2O_3$), or the like, and to subtract from that sum any moles of acid added. Acid may be added simply as HCl, $HNO_3$, $H_2SO_4$, acetic acid, and the like, or it may be added as aluminum sulfate ($Al_2O_3$ + $H_2SO_4$), chloride ($Al_2O_3$ + HCl), nitrate ($Al_2O_3$ + $HNO_3$), etc. Each mole of $Al_2O_3$ is itself equivalent to 2 moles of acid in this calcula-

tion, since $Al_2O_3$ consumes 2 moles of hydroxide in its conversion to framework aluminate ion. In particular, no contribution is assigned to organic bases such as amines in this calculation. Amines present in reaction mixtures having an $OH^-/SiO_2$ ratio of 0.01 are protonated when further acid is added. Until said additional acid exceed the amine present, the pH remains above 7.

The required reaction mixture can be produced from any material which supply the appropriate oxides. For example suitable sources of $Al_2O_3$ and $SiO_2$ include aluminates, silicates, silica hydrosol, silica gel, and silicic acid. The reaction mixture can be prepared either batchwise or continuously.

To produce the required large crystal ZSM-5, the reaction mixture is maintained at a temperature of from 38 to 260°C (100 to 500°F) for a period of time of from 1 hour to 180 days. A more preferred temperature range is from 82 to 177°C (180 to 350°F) for a period of time from 2 hours to 30 days. The solid product is then separated from the reaction medium, such as by cooling to room temperature, filtering and water washing. The resultant crystals have an average particle size diameter between 1 and 100 microns, depending on the value of the two ratios $OH^-/SiO_2$ ratio and the $Q_2O/SiO_2$ ratio.

The resultant ZSM-5 composition has the characteristic X-ray diffraction pattern of conventionally prepared ZSM-5, the significant lines of which are set forth in Table I above.

The presently prepared ZSM-5 can often have a low amount of alkali metal, e.g. sodium ions, as synthesized, and therefore can be utilized as catalytic material for a number of hydrocarbon conversion reactions directly after calcination to remove the organic material. However, the orignal alkali metal cations of the as synthesized ZSM-5 can be replaced in accordance with techniques well known in the art, at least in part, by ion exchange with other cations. Preferred replacing cations include metal ions, ammonium ions, hydrogen ions and mixtures thereof. Particularly preferred cations are those which render the zeolite catalytically active especially for hydrocarbon conversion. These include hydrogen, rare earth metals, aluminum, metals of Groups IIA, IIIB, IVb, VIB, VIII, IB IIB, IIIA, IVA. Of the replacing metallic cations, particular preference is given to cations of metals such as rare earth, Mn, Ca, Mg, Zn, Cd, Pd, Ni, Co, Ti, Al, Sn, Fe and Co.

A typical ion exchange technique would be to contact the synthetic ZSM-5 zeolite after calcination with a solution of a salt of the desired replacing cation or cations. Although a wide variety of salts can be employed, particular preference is given to chlorides, nitrates and sulfates.

Representative ion exchange techniques are disclosed in US Patent Nos. 3,140,249; 3,140,251; and 3,140,253.

Following contact with the salt solution for the desired replacing cation, the zeolite is then preferably washed with water and dried at a temperature of 65 to 316°C (150 to 600°F) and thereafter may be calcined in air or an inert gas at 260 to 816°C - (500 to 1500°F for periods of time ranging from 1 to 48 hours or more to produce a catalytically-active thermal decomposition product thereof.

The ZSM-5 produced by the present process may be used in the conversion of a wide variety of organic compounds, e.g. hydrocarbon compounds and oxygenates such as methanol. Such processes include, for example alkylation of aromatics with olefins, aromatization of normally gaseous olefins and paraffins, aromatization of normally liquid low molecular weight paraffins and olefins, isomerization of aromatics, paraffins and olefins, disproportionation of aromatics, transalkylation of aromatics, oligomerization of olefins and cracking and hydrocracking. All of the foregoing catalytic processes are of value since they result in upgrading of the organic charge being processed. The special catalytic advantages of large crystal size are illustrated in U.S. Patent No. 4,117,026.

In such catalytic process, the ZSM-5 can be used in intimate combination with a hydrogenating component such as tungsten, vanadium, molybdenum, rhenium, nickel, cobalt, chromium, manganese, or a noble metal such as platinum or palladium where a hydrogenation-dehydrogenation function is to be performed. Such components can be exchanged into the composition, impregnated therein or physically intimately admixed therewith. Such components can be impregnated in or on to ZSM-5 such as, for example, by, in the case of platinum, treating the zeolite with a platinum metal-containing ion. Thus, suitable platinum compounds for this purpose include chloroplatinic acid, platinous chloride and various compounds containing the platinum amine complex. Combinations of metals and methods for their introduction can also be used.

As in the case of many catalysts, it is desirable to incorporate the ZSM-5 hereby prepared with another material resistant to the temperatures and other conditions employed in organic conversion processes. Such matrix materials include active

and inactive materials and synthetic or naturally occurring zeolites as well as inorganic materials such as clays, silica and/or metal oxides. The latter may be either naturally occurring or in the form of gelatinous precipitates, sols or gels including mixtures of silica and metal oxides. Use of a material in conjunction with the ZSM-5, i.e. combined therewith, which is active, tends to improve the conversion and/or selectivity of the catalyst in certain organic conversion processes. Inactive materials suitably serve as diluents to control the amount of conversion in a given process so that products can be obtained economically and orderly without employing other means for controlling the rate of reaction. Frequently, zeolite materials have been incorporated into naturally occurring clays, e.g. bentonite, and kaolin. These materials, i.e. clays, oxides, etc., function, in part, as binders for the catalyst. It is desirable to provide a catalyst having good crush strength, because in a petroleum refinery the catalyst is often subjected to rough handling, which tends to break the catalyst down into powder-like materials which cause problems in processing.

Naturally occurring clays which can be composited with the hereby synthesized ZSM-5 catalyst include the montmorillonite and kaolin family, which families include the sub-bentonites, and the kaolins commonly known as Dixie, McNamme, Georgia and Florida clays or others in which the main mineral constituent is halloysite, kaolinite, dickite, nacrite, or anauxite. Such clays can be used in the raw state or initially subjected to calcination, acid treatment or chemical modification.

In addition to the foregoing materials, the ZSM-5 catalyst hereby synthesized can be composited with a porous matrix material such as silica-alumina, silca-magnesia, silica-zirconia, silica-thoria, silica-beryllia, silica-titania as well as ternary compositions such as silica-alumina-thoria, silica-alumina-zirconia, silica-alumina-magnesia and silica-magnesia-zirconia. The matrix can be in the form of a cogel. A mixture of these components could also be used. The relative proportions of finely divided crystalline aluminosilicate ZSM-5 and inorganic oxide gel matrix vary widely with the crystalline aluminosilicate content ranging from 1 to 90 percent by weight and more usually in the range of 10 to 70 percent by weight of the composite.

In order to more fully illustrate the nature of the invention and the manner of practicing same, the following examples are presented.

EXAMPLES

In the examples, ZSM-5 synthesis mixtures were produced from Q-brand sodium silicate, $Al_2(SO_4)_3$ $16H_2O$,

tetrapropylammonium (TPA) bromide and water such that the mole ratios of the constituents were as follows:

| | | |
|---|---|---|
| $SiO_2/Al_2O_3$ | = | 180 |
| $H_2O/SiO_2$ | = | 52 |
| $Na^+/SiO_2$ | = | 0.59 |
| $OH^-/SiO_2$ | = | 0.10 |
| $TPA/SiO_2$ | = | 0.10 |

In addition the mixtures contained the various mixed organoammonium templates (Q) listed in Table 2.

Crystallization was conducted in each case at 140°C with stirring for 20 hours and the results obtained are given in Table 2.

TABLE 2

ZSM-5 SYNTHESES WITH MIXED QUATERNARY CATIONS

| Templates | $\frac{TPA}{SiO_2}$ | $\frac{Q}{SiO_2}$ | Product | Crystal Size Range um |
|---|---|---|---|---|
| TPA only | 0.10 | 0 | 100% ZSM-5 | 0.8-6 |
| TPA + $Et_3PrN$ | 0.10 | 0.07 | 100% ZSM-5 | 0.8-6 |
| TPA + $Et_3PrN$ | 0.10 | 0.10 | 100% ZSM-5 | 1.5-6 |
| TPA + Choline[b] | 0.10 | 0.07 | 100% ZSM-5 | 0.4-5 |
| TPA + $BZEt_3N$[c] | 0.10 | 0.10 | 100% ZSM-5 | 1.2-7 |
| TPA + EtQuin[d] | 0.10 | 0.07 | 100% ZSM-5 | 0.4-5 |
| TPA + MeEtPip[e] | 0.10 | 0.07 | 100% ZSM-5 | 2-9 |
| TPA + MeEtPip | 0.10 | 0.10 | 100% ZSM-5 | 1.5-7 |
| TPA + $Me_2PYR$[f] | 0.10 | 0.07 | 65% ZSM-5 | 5-10 |

a - f : see accompanying drawings

**Claims**

1. A method of producing the zeolite ZSM-5 having an average particle size of at least 1 micron, comprising preparing a reaction mixture containing water and sources of an alkali metal oxide, alumina, silica, a $C_2$-$C_5$ tetralkylammonium cation R, and a mixed ammonium cation Q, the reaction mixture being arranged so that:

   a) the $OH^-/SiO_2$ mole ratio is between 0.01 and 0.5,

   b) the $Q/SiO_2$ mole ratio is between 0.01 and 1.0, and

   c) Q is the mixed ammonium cation $R^1$, $R^2$, $R^3$, $R^4$ $N^+$ in which at least two of the $R^1$, $R^2$, $R^3$, and $R^4$ groups are different and each is selected from H, alkyl or heteroalkyl of 1 to 20 carbon atoms, aryl, heteroaryl, and cycloalkyl or heterocycloalkyl of 3 to 6 carbon atoms, provided that were $R^1$ is methyl, at least one of $R^2$, $R^3$ and $R^4$ is other than $C_2$-$C_5$ alkyl; or wherein Q is a mixed ammonium cation in which the nitrogen atom is the or a heteroatom in a heterocyclic compound and is also bonded to at least one group $R^5$ wherein $R^5$ is selected from H, alkyl or heteroalkyl of 1 to 20 carbon atoms, aryl or heteroaryl, and cycloalkyl or heterocycloalkyl of 3 to 6 carbon atoms.

2. A method as claimed in claim 1 wherein the composition of the reaction mixture, in terms of mole ratios of oxides is:

| | | |
|---|---|---|
| $Al_2O_3/SiO_2$ | = | 0-0.2 |
| $H_2O/SiO_2$ | = | 5-200 |
| $OH^-/SiO_2$ | = | 0.01-0.5 |
| $M/SiO_2$ | = | 0.01-3.0 |
| $Q/SiO_2$ | = | 0 01-1 0 |
| $R/SiO_2$ | = | 0.01-1.0 |

3. A method as claimed in claim 1 or claim 2 wherein $OH^-/SiO_2$ mole ratio is 0 01 -0 2.
4. A method as claimed iun any preceding claim wherein $Q/SiO_2$ is 0 01 -0 5.
5. A method as claimed in any preceding claim wherein Q is the triethylpropylammonium cation.
6. A method as claimed in any one of claims 1 to 4 wherein Q is the 2 hydroxyethyltrimethylammonium cation.
7. A method as claimed in any one of claims 1 to 4 wherein Q is the trimethylbenzylammonium cation.
8. A method as claimed in any one of claims 1 to 4 wherein Q is the ethylquinolinium cation.
9. A method as claimed in any one of claims 1 to 4 wherein Q is the methylethylpiperdinium cation.
10. A method as claimed in any one of claims 1 to 4 wherein Q is the di(N-ethyl)pyrazinium cation.

a - $(C_2H_5)_3 N^+ C_3H_7$

b - $HO-(CH_2)_2 N^+ (CH_3)_3$

c - 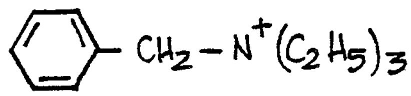

d - 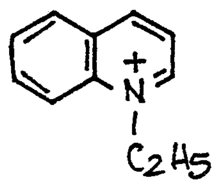

e - 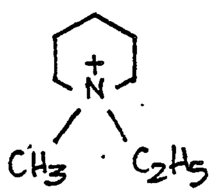

f -